# EUROPÄISCHE PATENTANMELDUNG

(11) **EP 4 166 515 A1**
(43) Veröffentlichungstag der Anmeldung: **19.04.2023**
(21) Anmeldenummer: 22201376.5
(22) Anmeldetag: 13.10.2022
(51) Int. Cl.: C02F 3/32, A47K 11/12, E03D 13/00, C02F 1/28

(54) **VORRICHTUNG UND VERFAHREN ZUM AUFBEREITEN VON URINHALTIGEM ABWASSER**

(30) Priorität: 13.10.2021 AT 508192021
(71) Anmelder: alchemia-nova GmbH, 1140 Wien (AT)
(72) Erfinder: WATZKE, Stefan, 1020 Wien (AT); LINES, Egmont, 1150 Wien (AT); KISSER, Johannes, 1140 Wien (AT); HEITZLHOFER, Theresa, 1150 Wien (AT); GATTRINGER, Heinz Jose, 3002 Purkersdorf (AT); EDLINGER-HOLZINGER, Julia, 1140 Wien (AT)
(74) Vertreter: Beer & Partner Patentanwälte KG

(57) **Zusammenfassung**

Eine Vorrichtung zum Aufbereiten von Abwasser, insbesondere urinhaltigem Abwasser, hat mehrere Tanks (3, 6, 9, 10, 11, 19, 20, 22), die mit Verbindungsleitungen verbunden sind, und Pflanzen (12, 13, 14), wobei wenigstens einige der Tanks Pflanzentanks (9, 10, 11) sind, die wenigstens teilweise Wurzelwerk der Pflanzen (12, 13, 14) enthalte. Wenigstens einige der Verbindungsleitungen sind an wenigstens eine Pumpe (5, 7, 23, 24), durch welche Flüssigkeiten (15, 16, 17) zwischen den Tanks (3, 6, 9, 10, 11, 19, 20, 22) transportierbar, angeschlossen.

## Beschreibung

Die Erfindung betrifft eine Vorrichtung und ein Verfahren zum Aufbereiten von Abwasser, insbesondere urinhaltigem Abwasser.

Pflanzenbasierte Kläranlagen werden bisher vor allem in ländlichen Gebieten in horizontaler Ebene eingesetzt. Bekannt sind vor allem Systeme zur Grauwasseraufbereitung. Diese reinigen Abwasser bis zur Wiederverwendung als Brauchwasser, wodurch einerseits der Wasserverbrauch reduziert wird und andererseits Abwasser aufgrund der solarbasierten Funktionsweise pflanzlicher Photosynthese mit wenig Energieaufwand gereinigt werden kann.

Bereits länger bekannt sind naturnahe Schwimmteiche, bei denen ebenfalls Filter- bzw. Klärfunktionen durch Pflanzen übernommen werden.

Beide Nutzungen der Technologie haben allerdings große Anforderungen an den benötigten Platz und sind daher inhärent unflexibel im Einsatz. Ein "Nachrüsten" dieser Technologie ist für den urbanen Raum daher nahezu unmöglich.

Weiters können mit derartigen Anlagen in der Regel nur Grauwasser gereinigt werden. Eine Reinigung von vorwiegend mit Urin belastetem Wasser ist nicht möglich, da dies die Pflanzen auf Dauer schädigen würde.

Der Erfindung liegt daher die Aufgabe zu Grunde, die oben beschriebenen Nachteile zu überwinden und eine urbane Nutzung pflanzenbasierter Klärtechnik zu erleichtern.

Gelöst wird diese Aufgabe erfindungsgemäß durch eine Vorrichtung mit den Merkmalen des Anspruchs 1 und ein Verfahren mit den Merkmalen des Anspruchs 9.

Erfindungsgemäß ist bei einer Vorrichtung zum Aufbereiten von Abwasser, insbesondere urinhaltigem Abwasser, mit mehreren Tanks, die mit Verbindungsleitungen verbunden sind, und mit Pflanzen, wobei wenigstens einige der Tanks Pflanzentanks sind, die wenigstens teilweise Wurzelwerk der Pflanzen enthalten, wenigstens einige der Verbindungsleitungen an wenigstens eine Pumpe angeschlossen, wobei Flüssigkeiten mit Hilfe der wenigstens einen Pumpe zwischen den Tanks transportierbar sind bzw. transportiert werden.

Durch eine Anordnung in verschiedenen Tanks, zwischen denen Flüssigkeiten mit Pumpen bewegt werden, ist eine vertikale Anordnung möglich, die wesentlich platzsparender ist. Zusätzlich kann die Bewegung der Flüssigkeiten bewusst gesteuert werden, was bei Anordnungen, die einfach nur vertikal ausgerichtet sind und beispielsweise mit Schwerkraft arbeiten, nicht möglich ist. Eine rein vertikale Anordnung einer pflanzenbasierten Wasseraufbereitungsanlage, die lediglich mit Schwerkraft arbeitet, ist beispielsweise aus DE 20 2021 000 151 U1 bekannt.

Die Begriffe "Flüssigkeit" und "Flüssigkeiten" sind bei der Erfindung nur schwer voneinander abzugrenzen, da es sich im Wesentlichen immer um ein Gemisch aus Lösungen mit unterschiedlich starken Konzentrationen handelt, auf die auch nur bedingt Einfluss genommen werden kann. Insbesondere Urin kann als Naturprodukt in verschiedenen Konzentrationen und Zusammensetzungen auftreten. Ein Urin-Wasser-Gemisch kann daher von Urin nicht immer unterschieden werden. Im Sinne der Erfindung werden die beiden Begriffe "Flüssigkeit" und "Flüssigkeiten" daher als austauschbar betrachtet und verwendet.

In einer besonders bevorzugten Ausführungsform der Erfindung ist vorgesehen, dass die Tanks entlang einer Fließrichtung angeordnet sind und dass wenigstens zwei Tanks, vorzugsweise drei Tanks, Pflanzentanks sind, wobei die Pflanzentanks in Fließrichtung aufeinander folgen, vorzugsweise vertikal zueinander versetzt angeordnet sind und unmittelbar aufeinander folgen. Somit können Flüssigkeiten besonders effektiv gereinigt werden.

In vorteilhaften Weiterbildungen kann vorgesehen sein, dass Pflanzentanks Wurzelwerk von Pflanzen aus verschiedenen Pflanzengruppen aufweisen, insbesondere dass pro Pflanzentank Wurzelwerk von zumindest zwei Pflanzengruppen vorgesehen ist. Es können auch pro Pflanzentank Wurzelwerk nur einer Pflanzengruppe vorgesehen sein, wobei sich die Pflanzengruppe eines Pflanzentanks von der Pflanzengruppe eines anderen Pflanzentanks unterscheiden kann. Somit kann die Reinigung der Flüssigkeiten durch die Auswahl von bestimmten Pflanzengruppen beeinflusst werden, wobei die erfindungsgemäße Vorrichtung ebenfalls besonders dekorativ gestaltet werden kann.

Eine erste Pflanzengruppe kann Pflanzen mit folgenden Eigenschaften umfassen: schnellwüchsig; Fähigkeit, dichtes, streckendes Wurzelwerk zu bilden; nährstoffliebend oder hohen Nährstoffgehalt tolerierend; starke Regenerationsfähigkeit der Wurzeln und der oberirdischen Austriebe; Toleranz gegenüber einem pH-Wert von 5 bis 8,5; im Allgemeinen sehr robust.

Eine zweite Pflanzengruppe kann Pflanzen mit folgenden Eigenschaften umfassen: grasartig oder breitblättrig; Fähigkeit, robustes Wurzelwerk zu bilden; nährstoffliebend oder hohen Nährstoffgehalt tolerierend; teilweise auffällig blühend mit Nektar- oder Pollenproduktion; Toleranz gegenüber einem pH-Wert von 5 bis 8,5; teilweise verholzend; gute Regenerationsfähigkeit nach Rückschnitt oder nach Winterwelke. Vorzugsweise werden teilweise heimische Pflanzen in der Region des Standortes verwendet.

Eine dritte Pflanzengruppe kann Pflanzen mit folgenden Eigenschaften umfassen: überwiegend breitblättrig; nährstoffliebend oder hohen Nährstoffgehalt tolerierend; blühend mit Nektar- oder Pollenproduktion; Toleranz gegenüber einem pH-Wert von 5 bis 8,5; teilweise verholzend; gute Regenerationsfähigkeit nach Rückschnitt oder nach Winterwelke; markantes, ästhetisches und dekoratives Erscheinungsbild. Vorzugsweise werden möglichst heimische Pflanzenarten verwendet.

Beispiele für Pflanzen der ersten Pflanzengruppe sind Schilfgräser, wie z.B. Phragmites azstralis, Binsen, wie z.B. Juncus inflexus, Seggen, wie z.B. Carex acutiformis, und/oder Bambussorten, wie z.B. Fargesia sp. Beispiele für Pflanzen der zweiten Pflanzengruppe sind Gräser, wie z.B. Leymus arenarius, Schwertlilien, wie z.B. Iris pseudoacorus, Gilbweideriche, wie z.B. Lysimachia vulgaris, und/oder Schachtelhalme, wie z.B. Equisetum variegatum. Beipiele für Pflanzen der dritten Pflanzengruppe sind Lobelien, wie z.B. Lobelia vedrariensis, Weiderichgewächse, wie z.B. Lythrum salicaria, Farne, wie z.B. Athyrium filix-femina, Blumenrohr, wie z.B. Canna indica, und/oder tropische Pflanzen, wie z.B. Epiprenum sp. oder Monstera sp.

Um eine optimale Funktion der Vorrichtung zu gewährleisten, ist es sinnvoll, die konkrete Auswahl der Pflanzen an jene klimatischen Bedingungen anzupassen, in denen die Vorrichtung betrieben werden soll. Insbesondere in sehr ariden und heißen Gebieten kann, so der Vorteil der Vorrichtung, die immense Wasserersparnis besonders ausgenutzt werden.

Im Rahmen der Erfindung kann vorgesehen sein, dass die Pflanzentanks in Fließrichtung mit Pflanzen der ersten Pflanzengruppe vor den Pflanzentanks mit Pflanzen der zweiten Pflanzengruppe angeordnet sind, und dass die Pflanzentanks mit Pflanzen der zweiten Pflanzengruppe in Fließrichtung vor den Pflanzentanks mit Pflanzen der dritten Pflanzengruppe angeordnet sind. Somit kann z.B. erzielt werden, dass zuerst besonders robuste Pflanzen bzw. Pflanzen, die einen höheren Schadstoffgehalt in den Flüssigkeiten tolerieren, zuerst mit den Flüssigkeiten in Kontakt kommen.

Um die Flüssigkeiten optimal reinigen und gegebenenfalls in den Flüssigkeiten beinhaltete Stoffe für eine spätere Wiederverwertung gewinnen zu können, kann die erfindungsgemäße Vorrichtung einen Kohlefilter aufweisen, der vorzugsweise in Fließrichtung hinter den Pflanzentanks angeordnet ist. In Fließrichtung hinter dem Kohlefilter kann eine Entsalzungsanlage vorgesehen sein, die vorzugsweise mit wenigstens einem Brauchwassertank in Verbindung steht.

Das derart gereinigte, in wenigstens einem Brauchwassertank speicherbare Brauchwasser kann dann in eine in Fließrichtung hinter dem wenigstens einen Brauchwassertank angeordnete Aufnahmestelle für Urin gespeist werden. Das mit Urin vermischte Brauchwasser kann als Grauwasser bezeichnet werden, das in einen in Fließrichtung hinter der Aufnahmestelle für Urin angeordneten Grauwasser-Sammeltank transportierbar, insbesondere pumpbar, ist. Das Grauwasser kann dann wie beschrieben gereinigt und erneut als Brauchwasser verwendet werden.

Will man die Bewegung von Flüssigkeiten zwischen Tanks besonders zielgerichtet steuern, ist es vorteilhaft, möglichst genau über die konkrete Beschaffenheit der Flüssigkeiten innerhalb des Systems informiert zu sein. Gemäß einer bevorzugten Aus- und Durchführungsform der Erfindung ist daher wenigstens ein Sensor in oder an den Tanks oder Leitungen angeordnet und erfasst Sensordaten.

Bevorzugt handelt es sich dabei um einen Füllstandsensor, Leitfähigkeitsmesser, Refraktometer, Temperaturfühler, Aräometer, Schallgeschwindigkeitsmesser und/oder Durchflussmesser, mit dem/denen der Füllstand, die Leitfähigkeit, der Brechungsindex, die Temperatur, der Durchfluss, die Dichte, die Ausbreitungsgeschwindigkeit von Schall in der Flüssigkeit und/oder der Salzgehalt der in den Tanks und oder Verbindungsleitungen befindlichen Flüssigkeiten erfasst wird/werden.

Selbstverständlich sind auch andere Messungen, beispielsweise mikrobiologische Messungen, denkbar.

Die erfassten Sensordaten werden bevorzugt von einer Recheneinheit gesammelt, um dann aufgrund der Sensordaten eine vorteilhafte Bewegung der Flüssigkeiten durch das System zu bestimmen und durch Ansteuern der Pumpen herbeizuführen.

Im Rahmen der Erfindung kann wenigstens eine Belüftungseinrichtung, wie ein Luftkompressor und/oder ein Belüftungsschlauch, vorgesehen sein, die mit einem Tank, mehreren Tanks oder allen Tanks in Verbindung stehen kann. Somit kann ein Tank/können Tanks belüftet werden. Wenn Pflanzentanks belüftet werden, hat dies vorteilhafte Effekte auf die Vitalität und Wirkung der Pflanzen und besonders auf ein im Wurzelwerk der Pflanzen lebendes Mikrobiom.

Im Folgenden wird ein besonders vorteilhafter Gesamtaufbau der Vorrichtung beschrieben. Der Gesamtaufbau wird dabei zwar als besonders bevorzugt betrachtet, einzelne technische Merkmale, Anordnungen und Abfolgen innerhalb der Vorrichtung bzw. des Verfahrens können dabei aber auch unabhängig vom Gesamtaufbau vorteilhafte, bevorzugte Ausführungsformen der Erfindung sein. Weitere bevorzugte Ausführungsformen der Erfindung sind Gegenstand der übrigen Unteransprüche.

Nachstehend ist ein bevorzugtes Ausführungsbeispiel der Erfindung anhand der Zeichnung näher beschrieben. Es zeigt:

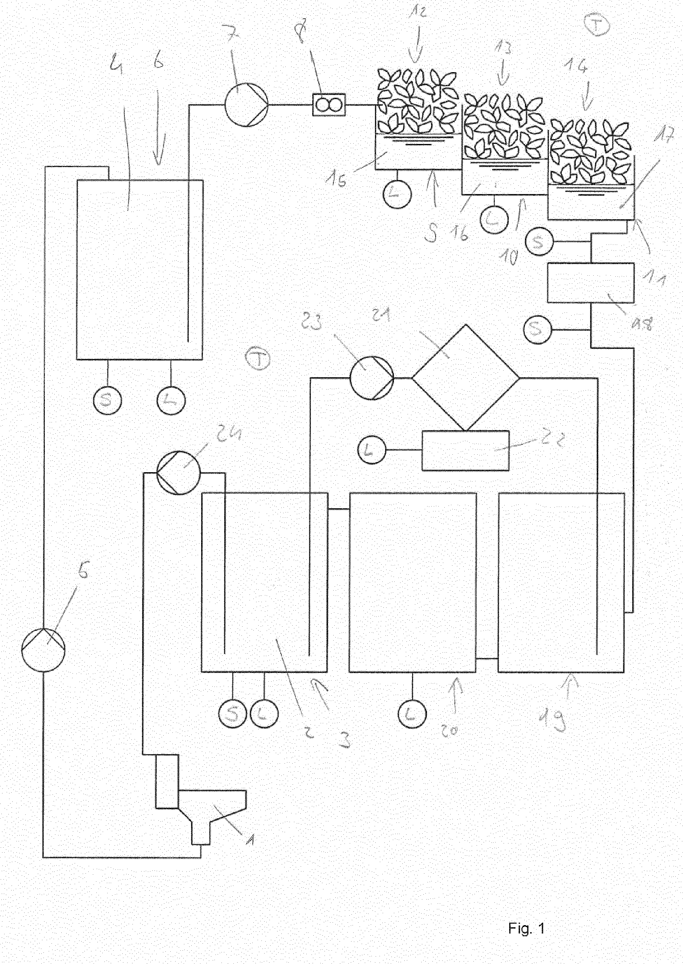

Fig. 1 stark schematisiert einen hydraulischen Schaltplan, der eine beispielhafte Ausführungsform der Vorrichtung schematisiert darstellt.

An einer Urinaufnahmestelle 1 wird Urin in das System aufgenommen und mit Brauchwasser 2 aus einem letzten Brauchwassertank 3 gespült. Dabei entstehendes Abwasser 4, insbesondere Grauwasser, wird mit einer Pumpe 5 in einen Grauwasser-Sammeltank 6 geleitet.

Das Abwasser 4 wird dem Grauwasser-Sammeltank 6 dann mit einer Pumpe 7 entnommen und durch einen Durchflussmesser 8 zu Pflanzentanks 9, 10, 11 weitergeleitet. In der dargestellten Ausführungsform sind drei hintereinander angeordnete Pflanzentanks 9, 10, 11 dargestellt. Es ist im Sinne der Erfindung aber auch möglich, mehr Pflanzentanks 9, 10, 11 vorzusehen. Ebenso ist es möglich, die Pflanzentanks 9, 10, 11 nicht unmittelbar hintereinander anzuordnen, sondern Anordnungen mit Leitungen, Ventilen, zusätzlichen Pumpen, Zwischentanks oder dergleichen vorzusehen.

In den Pflanzentanks 9, 10, 11 sind Pflanzen 12, 13, 14 angeordnet, deren Wurzelwerk (nicht dargestellt) wenigstens teilweise in die Flüssigkeit 15, 16, 17, welche in den Pflanzentanks 9, 10, 11 angeordnet ist, ragt.

Nach den Pflanzentanks 9, 10, 11 folgt in Fließrichtung ein Aktivkohlefilter 18. Dieser kann bei Bedarf ausgetauscht werden. Dabei wird nicht nur die Aufbereitungsleistung des Systems erhalten, sondern es können auch wertvolle Rohstoffe, die aus der Nahrung über den menschlichen Stoffwechsel im Grauwasser landen, zurückgewonnen und wiederverwertet werden. Beispielsweise können Phosphate und/oder Nitrate gewonnen werden, die als wertvoller Bestandteil von Düngemittel verwendet werden können. Somit kann erfindungsgemäß Urin, der an sich ein Abfallprodukt ist, als Ausgangsstoff für die Gewinnung von Düngemittelinhaltsstoffen verwendet werden, die sonst häufig unter sehr umweltschädlichen Bedingungen als Bodenschätze abgebaut werden müssen und nach dem Ausscheiden aus der Nahrungskette verloren sind.

In der dargestellten Ausführungsform gelangt die Flüssigkeit nach dem Aktivkohlefilter 18 in drei miteinander verbundene Brauchwassertanks 3, 19, 20. Ausführungsformen, bei denen nur ein oder zwei Tanks oder auch mehr als drei Tanks verwendet werden, sind ebenfalls denkbar und können vom Fachmann entsprechend dem Platzangebot, der erwarteten Nutzung und anderer Faktoren angepasst werden.

Wird die besonders vorteilhafte Variante mit drei verbundenen Brauchwassertanks 3, 19, 20 gewählt, können diese die Funktion eines partitionierten Brauchwassertanks erfüllen. Damit kann eine mit den Tanks 3, 19 verbundene Entsalzungsanlage 21 besser arbeiten.

An die Entsalzungsanlage 21 ist ein Lake-Tank 22 angeschlossen. Dieser muss regelmäßig ausgeleert werden.

Aus den Brauchwassertanks 3, 19, 20, insbesondere dem in Fließrichtung letzten Brauchwassertank 3, wird dann wieder Wasser entnommen, um den Kreislauf von vorne zu beginnen. Sowohl die Entsalzungsanlage 21 als auch die Urinaufnahmestelle 1 werden durch Pumpen 23, 24 mit Brauchwasser 2 gespeist.

Wenn einzelne Komponenten im System entsprechend vertikal zueinander angeordnet sind, dann können entsprechende Pumpen 5, 7, 23, 24 auch weggelassen und durch steuerbare Schließmechanismen ersetzt werden. In diesem Fall wird die Flüssigkeit dann mittels Schwerkraft durch Teile des Systems bewegt. Nicht alle Pumpen 5, 7, 23, 24 können gleichzeitig weggelassen werden, da in einem vertikal ausgerichteten Kreislauf wenigstens eine Pumpe 5, 7, 23, 24 vorgesehen sein muss.

Über das gesamte System verteilt sind verschiedene Sensoren angeordnet. In der dargestellten Ausführungsform handelt es sich um Füllstandsensoren L, Temperatursensoren T und Sensoren zur Messung des Salzgehaltes S. Mittels der Sensoren L, T, S wird bestimmt, welche Flüssigkeit von einer Komponente des Systems in die in Fließrichtung folgende Komponente weitergeleitet wird. Die Daten der Sensoren werden in einer Recheneinheit (nicht dargestellt) gesammelt. Diese entscheidet dann automatisiert, welche Flüssigkeiten bewegt werden sollen.

Beispielhaft lassen sich folgende Entscheidungen, die automatisiert mittels der Recheneinheit getroffen werden, beschreiben:
Temperatursensoren T: Die Daten aus diesen Sensoren dienen als Grundlage für die automatisierte Entscheidung, ob die Pumpen eingeschaltet werden und das System überhaupt in den Betriebszustand geht. Hier geht es vor allem darum, Leitungen innerhalb des Systems vor Frost zu schützen.

Füllstandsensoren L: Die Daten aus diesen Sensoren dienen als Grundlage für die automatisierte Entscheidung über die Frequenz der Pumpvorgänge und damit auch über die Menge des behandelten/zu behandelnden Abwassers je Zeiteinheit, z.B. einer Stunde. Darüber hinaus kann eine Meldung an ein "Cloud"-Überwachungssystem ergehen, ob die Einheit demnächst einen Wartungsbesuch benötigen wird Eventuell kann auch ein Stopp der Betriebszustandes ausgelöst werden.

Sensoren S, die den Salzgehalt messen: In der dargestellten Ausführungsform wird die Leitfähigkeit des Wassers gemessen, damit wird ein Parameter erhoben, der auf die Salzkonzentration des Wassers in den verschiedenen Abschnitten Rückschlüsse erlaubt. Es wäre aber auch denkbar, den Salzgehalt mit anderen Methoden zu erfassen, beispielhaft seien hier die Messung der Ausbreitungsgeschwindigkeit von Schall in Flüssigkeiten oder die Bestimmung des Brechungsindex mittels Refraktometer genannt. Diese Sensordaten dienen als Grundlage für die automatisierte, computergesteuerte Entscheidung, wann, wie lange und wie oft die Entsalzungsanlage in Betrieb genommen werden muss.

Generell dienen alle Sensoren auch dazu, die korrekte Funktionsweise der Anlage zu überwachen und etwaige Fehlfunktionen rasch zu erkennen.

**Bezugszeichenliste:**

| | | | |
|---|---|---|---|
| 1 | Urinaufnahmestelle | 15 | Flüssigkeit |
| 2 | Brauchwasser | 16 | Flüssigkeit |
| 3 | Brauchwassertank (letzter) | 17 | Flüssigkeit |
| 4 | Abwasser | 18 | Aktivkohlefilter |
| 5 | Pumpe | 19 | Brauchwassertank (erster) |
| 6 | Grauwasser-Sammeltank | 20 | Brauchwassertank (Mitte) |
| 7 | Pumpe | 21 | Entsalzungsanlage |
| 8 | Durchflussmesser | 22 | Lake-Tank |
| 9 | Pflanzentank | 23 | Pumpe |
| 10 | Pflanzentank | 24 | Pumpe |
| 11 | Pflanzentank | T | Temperatursensor |
| 12 | Pflanzen | L | Füllstandsensor |
| 13 | Pflanzen | S | Salzgehaltsensor |
| 14 | Pflanzen | | |

## Patentansprüche

1. Vorrichtung zum Aufbereiten von Abwasser, insbesondere urinhaltigem Abwasser, mit mehreren Tanks (3, 6, 9, 10, 11, 19, 20, 22), die mit Verbindungsleitungen verbunden sind, und mit Pflanzen (12, 13, 14), wobei wenigstens einige der Tanks Pflanzentanks (9, 10, 11) sind, die wenigstens teilweise Wurzelwerk der Pflanzen (12, 13, 14) enthalten, **dadurch gekennzeichnet, dass** wenigstens einige der Verbindungsleitungen an wenigstens eine Pumpe (5, 7, 23, 24), durch welche Flüssigkeiten (15, 16, 17) zwischen den Tanks (3, 6, 9, 10, 11, 19, 20, 22) transportierbar sind, angeschlossen sind.

2. Vorrichtung nach Anspruch 1, **dadurch gekennzeichnet, dass** in oder an wenigstens einem Tank (3, 6, 9, 10, 11, 19, 20, 22) und/oder an oder in wenigstens einer Verbindungsleitung wenigstens ein Sensor (T, L, S) angeordnet ist, wobei der wenigstens eine Sensor vorzugsweise ein Füllstandsensor (L), Leitfähigkeitsmesser, Refraktometer, Temperaturfühler, Aräometer, Schallgeschwindigkeitsmesser und/oder Durchflussmesser ist.

3. Vorrichtung nach Anspruch 1 oder 2, **dadurch gekennzeichnet, dass** die Tanks (3, 6, 9, 10, 11, 19, 20, 22) entlang einer Fließrichtung angeordnet sind und dass wenigstens zwei Tanks, vorzugsweise drei Tanks, Pflanzentanks (9, 10, 11) sind, wobei die Pflanzentanks (9, 10, 11) in Fließrichtung aufeinander folgen, vorzugsweise vertikal versetzt zueinander angeordnet sind, und dass vorzugsweise pro Pflanzentank (9, 10, 11) Wurzelwerk von zumindest zwei Pflanzengruppen vorgesehen ist oder pro Pflanzentank (9, 10, 11) Wurzelwerk nur einer Pflanzengruppe vorgesehen ist, wobei sich die Pflanzengruppe wenigstens eines Pflanzentanks (9, 10, 11) von der Pflanzengruppe wenigstens eines anderen Pflanzentanks (9, 10, 11) unterscheidet.

4. Vorrichtung nach Anspruch 3, **dadurch gekennzeichnet, dass** die Vorrichtung einen Kohlefilter (18) aufweist und dass der Kohlefilter (18) in Fließrichtung hinter den Pflanzentanks (9, 10, 11) angeordnet ist.

5. Vorrichtung nach Anspruch 4, **dadurch gekennzeichnet, dass** die Vorrichtung eine Entsalzungsanlage (21) aufweist und dass die Entsalzungsanlage (21) in Fließrichtung hinter dem Kohlefilter (18) angeordnet ist.

6. Vorrichtung nach Anspruch 5, **dadurch gekennzeichnet, dass** die Vorrichtung wenigstens einen Brauchwassertank (3, 19, 20) aufweist und dass der wenigstens eine Brauchwassertank (3, 19, 20) mit der Entsalzungsanlage (21) in Verbindung steht.

7. Vorrichtung nach Anspruch 6, **dadurch gekennzeichnet, dass** die Vorrichtung eine Aufnahmestelle (1) für Urin aufweist und dass die Aufnahmestelle in Fließrichtung hinter dem wenigstens einen Brauchwassertank (3, 19, 20) angeordnet und mit Wasser (2) aus dem Brauchwassertank (3, 19, 20) speisbar ist, wobei die Vorrichtung vorzugsweise einen Grauwasser-Sammeltank (6) aufweist, der in Fließrichtung hinter der Aufnahmestelle (1) sowie vor den Pflanzentanks (9, 10, 11) angeordnet ist.

8. Vorrichtung nach einem der Ansprüche 1 bis 7, **dadurch gekennzeichnet, dass** die Vorrichtung eine Recheneinheit aufweist, die mit den Sensoren (T, L, S) und der wenigstens einen Pumpe (5, 7, 23, 24) in Verbindung steht, und dass die wenigstens eine Pumpe (5, 7, 23, 24) durch die Recheneinheit steuerbar ist.

9. Verfahren zum Betreiben einer Vorrichtung zum Aufbereiten von Abwasser, insbesondere urinhaltigem Abwasser, mit mehreren Tanks (3, 6, 9, 10, 11, 19, 20, 22), die mit Verbindungsleitungen verbunden sind, und mit Pflanzen (12, 13, 14), wobei wenigstens einige der Tanks (9, 10, 11) Pflanzentanks sind, die wenigstens teilweise Wurzelwerk der Pflanzen (12, 13, 14) enthalten, **dadurch gekennzeichnet, dass** wenigstens einige der Verbindungsleitungen an wenigstens eine Pumpe (5, 7, 23, 24), durch welche Flüssigkeiten zwischen den Tanks (3, 6, 9, 10, 11, 19, 20, 22) transportiert werden, angeschlossen sind.

10. Verfahren nach Anspruch 9, **dadurch gekennzeichnet, dass** Sensoren (L, T, S) in oder an wenigstens einem Tank (3, 6, 9, 10, 11, 19, 20, 22) und oder in oder an wenigstens einer Leitung Sensordaten erfassen, wobei vorzugsweise wenigstens der Füllstand, die Leitfähigkeit, der Brechungsindex, die Temperatur, der Durchfluss, die Dichte, die Ausbreitungsgeschwindigkeit von Schall in der Flüssigkeit und/oder der Salzgehalt der in den Tanks (3, 6, 9, 10, 11, 19, 20, 22) und oder Verbindungsleitungen befindlichen Flüssigkeiten erfasst wird.

11. Verfahren nach Anspruch 9 oder 10, **dadurch gekennzeichnet, dass** die Flüssigkeiten zwischen den Tanks (3, 6, 9, 10, 11, 19, 20, 22) in einer Fließrichtung durchfließen, dass wenigstens zwei Pflanzentanks (9, 10, 11) durchflossen werden, wobei die wenigstens zwei Pflanzentanks (9, 10, 11) nacheinander durchflossen werden, vorzugsweise vertikal versetzt zueinander durchflossen werden, und dass vorzugsweise pro Pflanzentank (9, 10, 11) Wurzelwerk von zumindest zwei Pflanzengruppen verwendet wird oder die Pflanzen (12, 13, 14) in den Pflanzentanks (9, 10, 11) verschiedenen Pflanzengruppen angehören, insbesondere einer ersten, zweiten und dritten Pflanzengruppe, dass ein Pflanzentank (9, 10, 11) jeweils nur Pflanzen (12, 13, 14) aus einer Pflanzengruppe aufweist und dass in Fließrichtung erst wenigstens ein Pflanzentank (9, 10, 11) mit Pflanzen (12) aus der ersten Pflanzengruppe, dann wenigstens ein Pflanzentank (9, 10, 11) mit Pflanzen (13) aus der zweiten Pflanzengruppe und dann wenigstens ein Pflanzentank (9, 10, 11) mit Pflanzen (14) aus der dritten Pflanzengruppe durchflossen wird.

12. Verfahren nach Anspruch 11, **dadurch gekennzeichnet, dass** das aufzubereitende Abwasser nach den Pflanzentanks (9, 10, 11) einen Kohlefilter (18) durchfließt, wobei insbesondere Phosphor abgeschieden wird.

13. Verfahren nach Anspruch 11 oder 12, **dadurch gekennzeichnet, dass** das aufzubereitende Abwasser nach dem Kohlefilter (18) in Brauchwassertanks (3, 19, 20) fließt, die mit einer Entsalzungsanlage (21) in Verbindung stehen, in der das Abwasser entsalzt und damit zu Brauchwasser (2) umgewandelt wird.

14. Verfahren nach Anspruch 13, **dadurch gekennzeichnet, dass** Urin über eine Urinaufnahmestelle (1) aufgenommen wird und dass die Urinaufnahmestelle (1) mit Brauchwasser (2) aus den Brauchwassertanks (3, 19, 20) gespült wird, wobei vorzugsweise von der Urinaufnahmestelle (1) Abwasser in einen Grauwasser-Sammeltank (6) fließt, der dem Pflanzentank (9, 10, 11) oder den Pflanzentanks (9, 10, 11) in Fließrichtung vorgelagert ist.

15. Verfahren nach einem der Ansprüche 10 bis 14, **dadurch gekennzeichnet, dass** die erfassten Sensordaten von einer Recheneinheit gesammelt werden und dass die Recheneinheit aufgrund der Sensordaten eine oder mehrere Pumpe(n) (5, 7, 23, 24) steuert, die daraufhin Flüssigkeit entlang der Fließrichtung zwischen den Tanks (3, 6, 9, 10, 11, 19, 20, 22) bewegt/bewegen.
